(19) Europäisches Patentamt

European Patent Office

Office européen des brevets

(11) **EP 1 257 082 A2**

(12) **EUROPEAN PATENT APPLICATION**

(43) Date of publication:
**13.11.2002 Bulletin 2002/46**

(51) Int Cl.7: **H04L 9/06**

(21) Application number: **02076805.7**

(22) Date of filing: **08.05.2002**

| | |
|---|---|
| (84) Designated Contracting States:<br>**AT BE CH CY DE DK ES FI FR GB GR IE IT LI LU MC NL PT SE TR**<br>Designated Extension States:<br>**AL LT LV MK RO SI** | (72) Inventors:<br>• **McCanny, John Vincent**<br>  **Newtownards, County Down BT23 7UF (GB)**<br>• **McLoone, Maire Patricia**<br>  **Glenties, County Donegal (IE)** |
| (30) Priority: **11.05.2001 GB 0111521** | (74) Representative: **Wallace, Alan**<br>**F. R. Kelly & Co.**<br>**9 University Street**<br>**Belfast BT7 1FY (GB)** |
| (71) Applicant: **Amphion Semiconductor Limited Belfast BT9 5BS (GB)** | |

(54) **A computer useable product for generating data encryption/decryption apparatus**

(57)     One aspect of the invention provides a computer useable product co-operable with a circuit synthesis tool for generating a data encryption and apparatus for encrypting a block of plaintext data using a cipher key to produce a block of encrypted data. The product provides a first parameter, programmable by a user, the value of which determines the length of the cipher key. The product is arranged to cause the apparatus to implement a number of encryption rounds, the number of rounds depending on the value of the first parameter. The computer useable product further includes means for implementing a key schedule module for generating, from the cipher key, a number of round keys for use in respective encryption rounds, the number of generated round keys depending on the value of the first parameter. The product preferably takes the form of one or more blocks of HDL (Hardware Description Language) code.

Fig. 9

EP 1 257 082 A2

**Description**

FIELD OF THE INVENTION

The present invention relates to the field of data encryption. The invention relates particularly to a computer useable product for generating data encryption/decryption apparatus.

BACKGROUND TO THE INVENTION

Secure or private communication, particularly over a telephone network or a computer network, is dependent on the encryption, or enciphering, of the data to be transmitted. One type of data encryption, commonly known as private key encryption or symmetric key encryption, involves the use of a key, normally in the form of a pseudo-random number, or code, to encrypt data in accordance with a selected data encryption algorithm (DEA). To decipher the encrypted data, a receiver must know and use the same key in conjunction with the inverse of the selected encryption algorithm. Thus, anyone who receives or intercepts an encrypted message cannot decipher it without knowing the key.
Data encryption is used in a wide range of applications including IPSec Protocols, ATM Cell Encryption, Secure Socket Layer (SSL) protocol and Access Systems for Terrestrial Broadcast.
In September 1997 the National Institute of Standards and Technology (NIST) issued a request for candidates for a new Advanced Encryption Standard (AES) to replace the existing Data Encryption Standard (DES). A data encryption algorithm commonly known as the Rijndael Block Cipher was selected for the new AES.
Normally, a data encryption/decryption apparatus is arranged to encrypt or decrypt data using a cipher key of fixed length. However, the Rijndael block cipher provides for encryption or decryption using a cipher key of 128-bits, 192-bits or 256-bits. It would be desirable therefore to provide a product for generating a data encryption/decryption apparatus for operation with a selected one of a plurality of cipher key lengths.

SUMMARY OF THE INVENTION

A first aspect of the invention provides a computer useable product co-operable with a circuit synthesis tool for generating a data encryption apparatus for encrypting a block of plaintext data using a cipher key to produce a block of encrypted data, the computer usable product comprising a first parameter, programmable by a user, the value of which determines the length of the cipher key, the computer useable product being arranged to cause the apparatus to implement a number of encryption rounds, the number of rounds depending on the value of the first parameter, the computer useable product further including means for implementing a key schedule module for generating, from the cipher key, a number of round keys for use in respective encryption rounds, the number of generated round keys depending on the value of the first parameter.
Preferably, the computer useable product is arranged to generate a plurality of instances of a data processing module arranged in a data processing pipeline, the data processing modules being arranged to implement respective encryption rounds, wherein the number of data processing modules is determined by the value of said first parameter.
The invention is particularly advantageous when implementing a Rijndael data encryption (or decryption) apparatus since Rijndael specifies three alternative cipher key lengths, namely 128-bits, 192-bits or 256-bits. The corresponding number of required encryption/decryption rounds are 10, 12 and 14 respectively. Hence, the product the invention enables a user to select whether to perform encryption/decryption using a 128-bit, 192-bit or 256-bit cipher key by setting said first parameter accordingly.
The computer useable product then generates a data encryption/decryption apparatus having an appropriate number of rounds and round keys. Moreover, in Rijndael the calculation of the round keys from the cipher key differs depending on the cipher key length. The first parameter may correspond with the actual number of bits in the cipher key or with the cipher key block length, $N_k$. In the preferred embodiment, the component has two parameters which can be set by the user, one for cipher key length (in bits) and one for cipher key block length (in 4-byte vectors.
Preferred features of the computer useable product are set out in the dependent claims.
From a second aspect, the invention provides a computer useable product arranged to generate an apparatus for performing data decryption. From a third aspect, the invention provides a computer useable product arranged to generate an apparatus for selectably performing data encryption or data decryption.
Preferably, the computer useable product comprises hardware description language (HDL) code which, when synthesised using conventional synthesis tools, generates circuit design data, such as an EDIF netlist. The design data may then be supplied to a conventional implementation tool to generate semiconductor chip design data, such as mask definitions or other chip design information, for creating a semiconductor chip (such as an ASIC), or to generate data for programming a programmable logic device, such as an FPGA. The invention also provides said computer useable product stored on a computer useable medium.

Further aspects of the invention provide a method for generating a data encryption and/or decryption apparatus.

In the following description of preferred embodiments of the invention, a fully pipelined data encryption and decryption apparatus is presented in the context of implementing the Rijndael algorithm. A skilled person will appreciate that at least some of the aspects of the present invention may equally be employed in the implementation of other private key, or symmetric key, encryption/decryption algorithms in which at least some of the data transformations differ between encryption and decryption. The Serpent Algorithm is an example of such an algorithm.

The apparatus, or cores, are conveniently implemented using Foundation Series 3.li software on the Virtex-E (Trade Mark) FPGA (Field Programmable Gate Array) family of devices as produced by Xilinx of San Jose, California, USA (www.xilinx.com). In the preferred embodiment, the apparatus is implemented on a Virtex XCV3200E-8-CG1156 FPGA device.

Other aspects of the invention will be apparent to those ordinarily skilled in the art upon review of the following description of specific embodiments and with reference to the accompanying drawings.

BRIEF DESCRIPTION OF THE DRAWINGS

Embodiments of the invention are now described by way of example and with reference to the accompanying drawings in which:

Figure 1a is a representation of data bytes arranged in a State rectangular array;

Figure 1b is a representation of a cipher key arranged in a rectangular array;

Figure 1c is a representation of an expanded key schedule;

Figure 2 is a schematic illustration of the Rijndael Block Cipher;

Figure 3 is a schematic illustration of a normal Rijndael Round;

Figure 4 is a schematic representation of a preferred embodiment of a data encryption/decryption apparatus;

Figure 5 is a schematic representation of a data processing module included in the apparatus of Figure 4;

Figure 5a is a schematic representation of a MixCol transformation module included in the data processing module of Figure 5;

Figure 6 is a representation of a data block in State form;

Figure 7 is a table of LUT values for use during encryption;

Figure 8 shows VHDL code for implementing a multiplier block;

Figure 9 shows a flow chart for implementing the Rijndael key schedule, in accordance with the invention, with either a 128-bit, 192-bit or 256-bit cipher key;

Figure 10 is a table of LUT values for use during data decryption;

Figure 11 is a schematic representation of a preferred arrangement for initialising LUTs;

Figure 12 is a VHDL code listing suitable for implementing the flow chart of Figure 9;

Figures 13, 14 and 15 are VHDL code listings for performing remainder functions suitable for use with the code of Figure 12; and

Figure 16 is VHDL code for an overall encryption/decryption core entity, showing parameters for setting cipher key length and key array length.

DETAILED DESCRIPTION OF THE DRAWINGS

The Rijndael algorithm is a private key, or symmetric key, DEA and is an iterated block cipher. The Rijndael algorithm (hereinafter "Rijndael") is defined in the publication "The Rijndael Block Cipher: AES proposal" by J. Daemen and V. Rijmen presented at the First AES Candidate Conference (AES1) of August 20-22, 1998, the contents of which publication are hereby incorporated herein by way of reference.

In accordance with many private key DEAs, including Rijndael, encryption is performed in multiple stages, commonly known as iterations, or rounds. Such DEAs lend themselves to implementation using a data processing pipeline, or pipelined architecture. In a pipelined architecture, a respective data processing module is provided for each round, the data processing modules being arranged in series. A message to be encrypted is typically split up into data blocks that are fed in series into the pipeline of data processing modules. Each data block passes through each processing module in turn, the processing modules each performing an encryption operation (or a decryption operation) on each data block. Thus, at any given moment, a plurality of data blocks may be simultaneously processed by a respective processing module - this enables the message to be encrypted (and decrypted) at relatively fast rates.

Each processing module uses a respective sub-key, or round key, to perform its encryption operation. The round keys are derived from a primary key, or cipher key.

With Rijndael, the data block length and cipher key length can be 128, 192 or 256 bits. The NIST requested that the AES must implement a symmetric block cipher with a block size of 128 bits, hence the variations of Rijndael which can operate on larger block sizes do not form part of the standard itself. Rijndael also has a variable number of rounds namely, 10, 12 and 14 when the cipher key lengths are 128, 192 and 256 bits respectively.

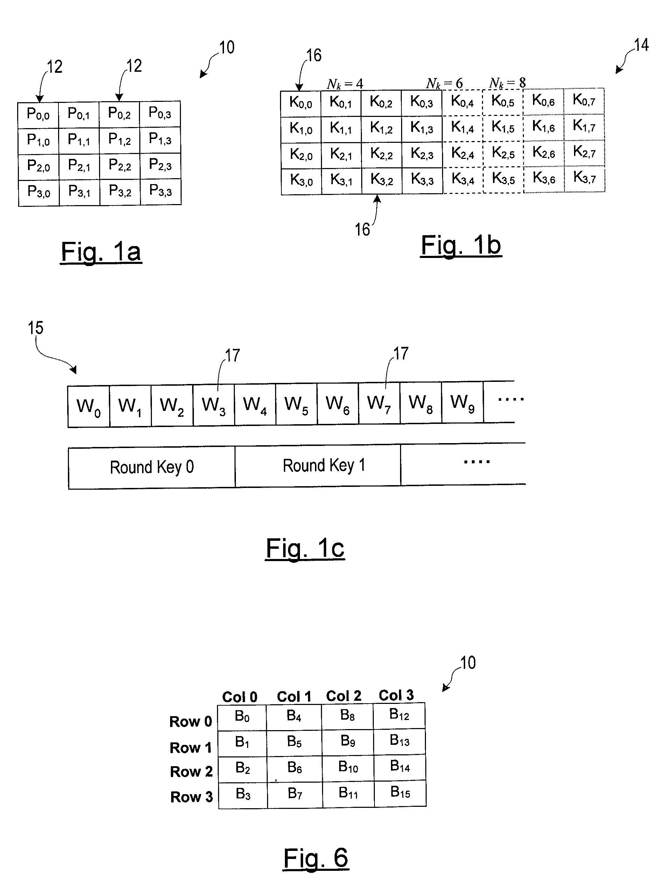

With reference to Figure 1a, the transformations performed during the Rijndael encryption operations consider a data block as a 4-column rectangular array, or State (generally indicated at 10 in Figure 1a), of 4-byte vectors 12. For example, a 128-bit plaintext (i.e. unencrypted) data block consists of 16 bytes, $B_0$, $B_1$, $B_2$, $B_3$, $B_4$... $B_{14}$, $B_{15}$. Hence, in the State 10, $B_0$ becomes $P_{0,0}$, $B_1$ becomes $P_{1,0}$, $B_2$ becomes $P_{2,0}$ ... $B_4$ becomes $P_{0,1}$ and so on.

With reference to Figure 1b, the cipher key is also considered to be a multi-column rectangular array 14 of 4-byte vectors 16, the number of columns, $N_k$, depending on the cipher key length. In Figure 1b, the vectors 16 headed by bytes $K_{0,4}$ and $K_{0,5}$ are present when the cipher key length is 192-bits or 256-bits, while the vectors 16 headed by bytes $K_{0,6}$ and $K_{0,7}$ are only present when the cipher key length is 256-bits.

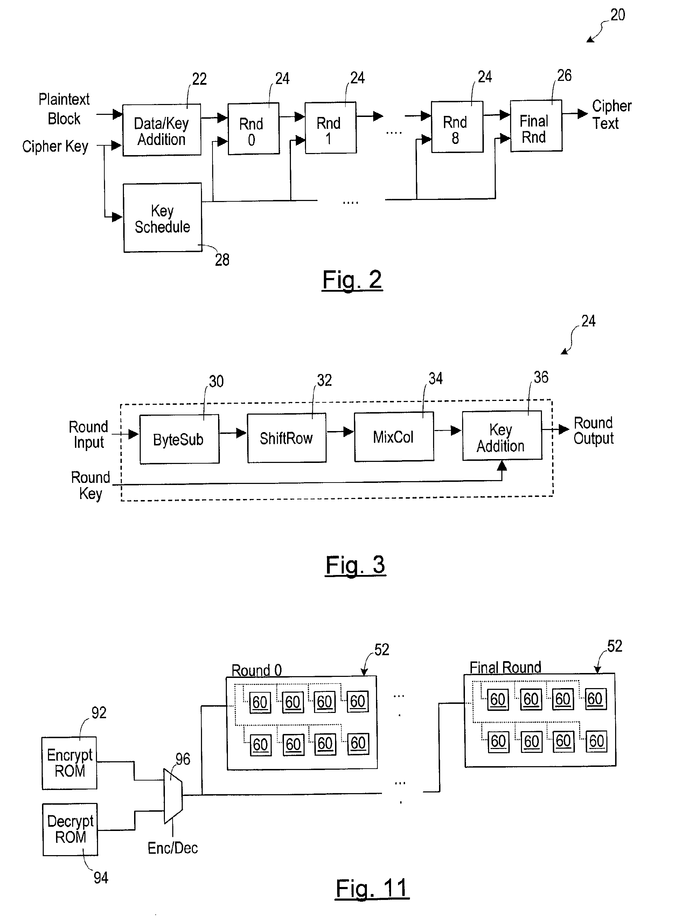

Referring now to Figure 2, there is shown, generally indicated at 20, a schematic representation of Rijndael. The algorithm design consists of an initial data/key addition operation 22, in which a plaintext data block is added to the cipher key, followed by nine, eleven or thirteen rounds 24 when the key length is 128-bits, 192-bits or 256-bits respectively and a final round 26, which is a variation of the typical round 24. There is also a key schedule operation 28 for expanding the cipher key in order to produce a respective different round key for each round 24, 26.

Figure 3 illustrates the typical Rijndael round 24. The round 24 comprises a ByteSub transformation 30, a ShiftRow transformation 32, a MixColumn transformation 34 and a Round Key Addition 36. The ByteSub transformation 30, which is also known as the *s-box* of the Rijndael algorithm, operates on each byte in the State 10 independently.

The s-box 30 involves finding the multiplicative inverse of each byte in the finite, or Galois, field $GF(2^8)$. An affine transformation is then applied, which involves multiplying the result of the multiplicative inverse by a matrix M (as defined in the Rijndael specification) and adding to the hexadecimal number '63' (as is stipulated in the Rijndael specification).

In the ShiftRow transformation 32, the rows of the State 10 are cyclically shifted to the left. Row 0 is not shifted, row 1 is shifted 1 place, row 2 by 2 places and row 3 by 3 places.

The MixColumn transformation 34 operates on the columns of the State 10. Each column, or 4-byte vector 12, is considered a polynomial over $GF(2^8)$ and multiplied modulo $x^4+1$ with a fixed polynomial $c(x)$, where,

$$c(x) = \text{'03'} \, x^3 + \text{'01'} \, x^2 + \text{'01'} \, x + \text{'02'} \tag{1}$$

(the inverted commas surrounding the polynomial coefficients signifying that the coefficients are given in hexidecimal).

Finally in Round Key Addition 36, the State 10 bytes and the round key bytes are added by a bitwise XOR operation.

In the final round 26, the MixColumn transformation 34 is omitted.

The Rijndael key schedule 28 consists of two parts: Key Expansion and Round Key Selection. Key Expansion involves expanding the cipher key into an expanded key, namely a linear array 15 (Fig. 1c) of 4-byte vectors or words 17, the length of the array 15 being determined by the data block length, $N_b$, (in bytes) multiplied by the number of rounds, $N_r$, plus 1, i.e. array length = $N_b * (N_r + 1)$. In Rijndael, the data block length is normally four bytes, $N_b = 4$. When the key block length, $N_k$ = 4, 6 and 8, the number of rounds is 10, 12 and 14 respectively. Hence the lengths of the expanded key are as shown in Table 1 below.

Table 1.

| Length of Expanded Key for Varying Key | | | |
|---|---|---|---|
| Data Block Length, $N_b$ | 4 | 4 | 4 |
| Key Block Length, $N_k$ | 4 | 6 | 8 |
| Number of Rounds, $N_r$ | 10 | 12 | 14 |
| Expanded Key Length | 44 | 52 | 60 |

The first $N_k$ words of the expanded key comprise the cipher key. When $N_k$ = 4 or 6, each subsequent word, W[i], is found by XORing the previous word, W[i-1], with the word $N_k$ positions earlier, W[i-$N_k$]. For words 17 in positions which are a multiple of $N_k$, a transformation is applied to W[i-1] before it is XORed. This transformation involves a cyclic shift of the bytes in the word 17. Each byte is passed through the Rijndael s-box 30 and the resulting word is XORed with a round constant stipulated by Rijndael (see *Rcon(i)* function described below). However, when $N_k$ = 8, an additional transformation is applied: for words 17 in positions which are a multiple of (($N_k$*i) + 4), each byte of the word, W[i-1], is passed through the Rijndael s-box 30.

The round keys are selected from the expanded key 15. In a design with $N_r$ rounds, $N_r$ +1 round keys are required.
For example a 10-round design requires 11 round keys. Round key 0 comprises words W[0] to W[3] of the expanded key 15 (i.e. round key 0 corresponds with the cipher key itself) and is utilised in the initial data/key addition 22, round key 1 comprises W[4] to W[7] and is used in round 0, round key 2 comprises W[8] to W[11] and is used in round 1 and so on. Finally, round key 10 is used in the final round 26.

The decryption process in Rijndael is effectively the inverse of its encryption process. Decryption comprises an inverse of the final round 26, inverses of the rounds 24, followed by the initial data/key addition 22. The data/key addition 22 remains the same as it involves an XOR operation, which is its own inverse. The inverse of the round 24, 26 is found by inverting each of the transformations in the round 24, 26. The inverse of ByteSub 30 is obtained by applying the inverse of the affine transformation and taking the multiplicative inverse in GF($2^8$) of the result. In the inverse of the ShiftRow transformation 32, row 0 is not shifted, row 1 is now shifted 3 places, row 2 by 2 places and row 3 by 1 place. The polynomial, *c(x)*, used to transform the State 10 columns in the inverse of MixColumn 34 is given by,

$$c(x) = \text{'0B'} \, x^3 + \text{'0D'} \, x^2 + \text{'09'} \, x + \text{'0E'} \tag{2}$$

Similarly to the data/key addition 22, Round Key addition 36 is its own inverse. During decryption, the key schedule 28 does not change, however the round keys constructed for encryption are now used in reverse order. For example, in a 10-round design, round key 0 is still utilized in the initial data/key addition 22 and round key 10 in the final round 26. However, round key 1 is now used in round 8, round key 2 in round 7 and so on.

A number of different architectures can be considered when designing an apparatus or circuit for implementing encryption algorithms. These include Iterative Looping (IL), where only one data processing module is used to implement all of the rounds. Hence for an *n*-round algorithm, *n* iterations of that round are carried out to perform an encryption, data being passed through the single instance of data processing module *n* times. Loop Unrolling (LU) involves the unrolling of multiple rounds. Pipelining (P) is achieved by replicating the round i.e. devising one data processing module for implementing the round and using multiple instances of the data processing module to implement successive rounds. In such an architecture, data registers are placed between each data processing module to control the flow of data. A pipelined architecture generally provides the highest throughput. Sub-Pipelining (SP) is carried out on a partially pipelined design when the round is complex. It decreases the pipeline's delay between stages but increases the number of clock cycles required to perform an encryption. A fully pipelined architecture is preferred for the apparatus of the invention as this provides the highest throughput. It will be understood however that the invention may alternatively be applied to a sub-pipelined or iterative loop architecture.

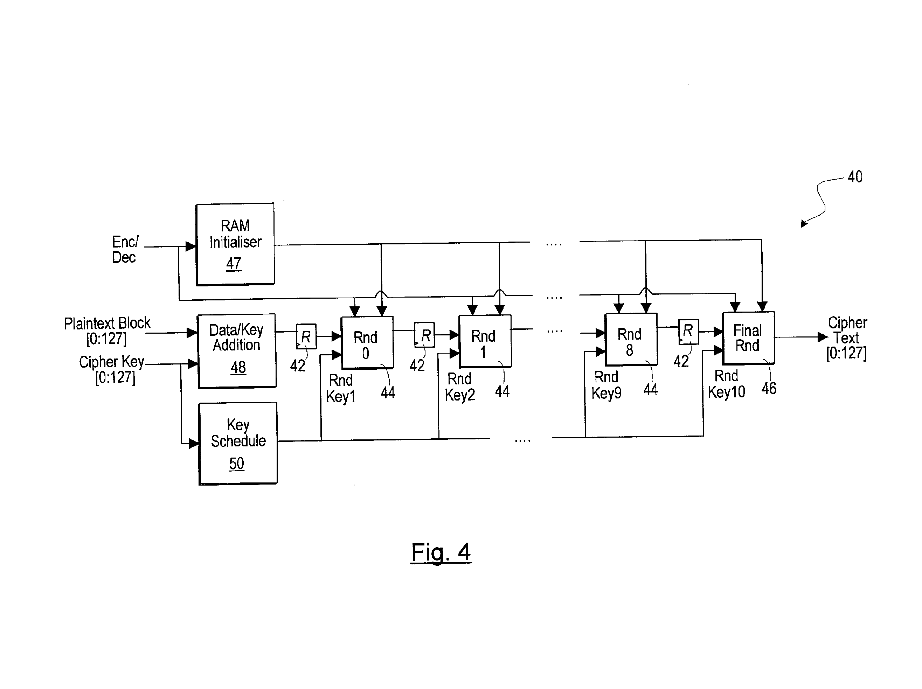

A preferred embodiment of a data encryption and decryption apparatus is now described. Figure 4 shows an apparatus, or core, generally indicated at 40, for selectably encrypting or decrypting data.

The apparatus 40 comprises a fully pipelined architecture including a pipeline of data processing modules 44 (hereinafter 'round modules 44') each arranged to implement the typical Rijndael round 24 and a data processing module 46 (hereinafter 'round module 46') arranged to implement the Rijndael final round 26.

Storage elements in the form of data registers 42 are provided before each round module 44, 46. For illustrative purposes only, the apparatus 40 is shown as implementing ten rounds and so corresponds to the case where both the input plaintext block length and the cipher key length are 128-bits. It will be understood from the foregoing description that the number of rounds depends on the cipher key length.

The apparatus 40 also includes a data/key addition module 48 arranged to implement the data/key addition operation 22 and a key schedule module 50 arranged to implement the key schedule 28 operations.

The preferred implementation of the modules 44, 46, 48 and 50 is now described in more detail.

The Data/Key Addition module 48 comprises an XOR component (not shown) arranged to perform a bitwise XOR operation of each byte $B_i$ of the State 10 comprising the input plaintext, with a respective byte $K_i$ of the cipher key.

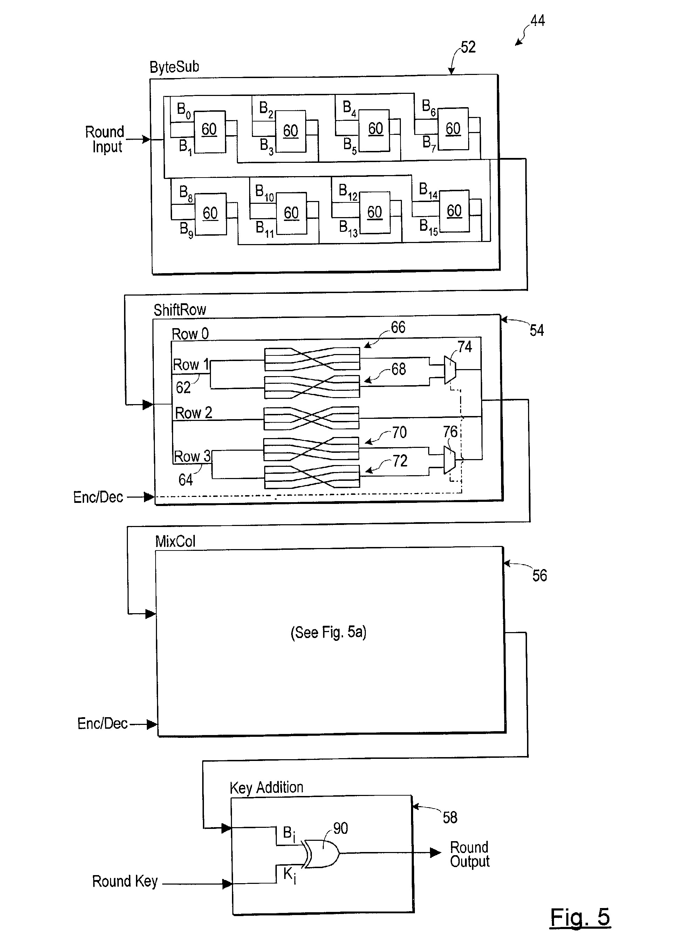

Referring now to Figure 5, there is shown a preferred implementation of the round module 44. The round module 44 includes a ByteSub module 52 arranged to implement the ByteSub transformation 30, a ShiftRow module 54 arranged to implement the ShiftRow transformation 32, a MixCol module 56 arranged to implement the MixCol transformation 34 and a Key addition module 58 arranged to implement the Key addition operation 36.

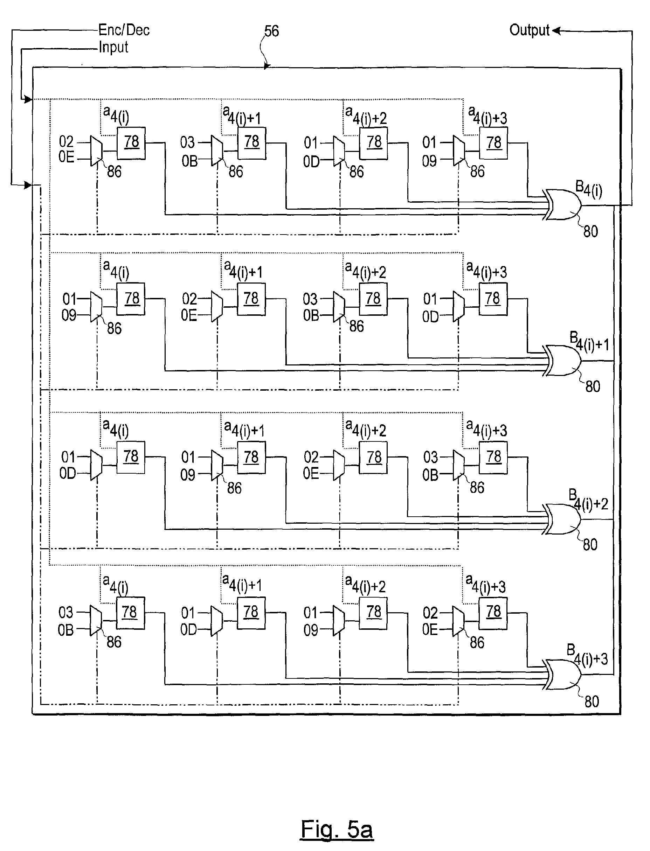

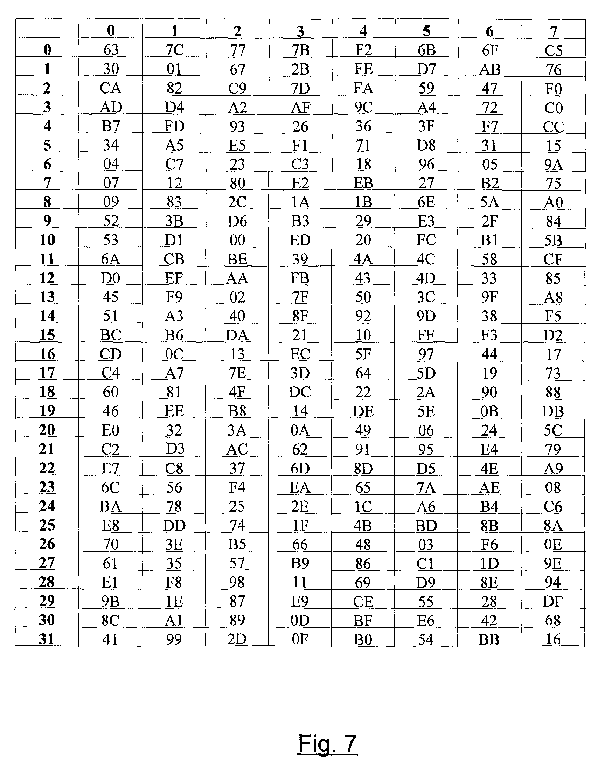

A consideration in the design of the apparatus 40 is the memory requirement. The ByteSub module 52 is therefore advantageously implemented as one or more look-up tables (LUTs) or ROMs. This is a faster and more cost-effective (in terms of resources required) implementation than implementing the multiplicative inverse operation and affine transformation in logic. Figure 6 shows, as the round input, an example State 10 in which the sixteen data bytes are labeled $B_0$ to $B_{15}$. Since the State bytes $B_0$ to $B_{15}$ are operated on individually, each ByteSub module 52 requires sixteen 8-bit to 8-bit LUTs. The Xilinx Virtex-E (Trade Mark) range of FPGAs are preferred for implementation as it contains FPGA devices with up to 280 BlockSelectRAM (BRAM) (Trade Mark) storage devices, or memories. Conveniently, a single BRAM can be configured into two single port 256 x 8-bit RAMs (a description of how to use the Xilinx BRAM is given in the Xilinx Application Note XAPP130: Virtex Series; using the Virtex Block Select RAM + Features; URL: http://www.xilinx.com; March 2000). Hence, when using a Virtex FPGA, eight BRAMs are used in each ByteSub module 52 to implement the 16 LUTs, since each of the two RAMs in each respective BRAM can serve as an 8-bit to 8-bit LUT (when the write enable input of the RAM is low ('0'), transitions on the write clock input are ignored and data stored in the RAM is not affected. Hence, if the RAM is initialized and both the input data and write enable pins are held low, then the RAM can be utilized as a ROM or LUT). Figure 7 shows a table giving the hexadecimal values required in an LUT for implementing the ByteSub transformation 30 during Rijndael encryption. The values given in Figure 7 are set out in ascending order in rows reading from left to right. Thus, row 0 of the table gives the LUT outputs for input values from '00' to '07' (hexadecimal), row 1 gives the LUT output values for input values from '08' to '0F' and so on until row 31 gives the LUT output values for inputs 'F8' to 'FF'. For example, an input of '00' (hexidecimal) to the LUT returns the output '63' (hexidecimal), an input of '8A' (hexidecimal) to the LUT returns the output '7E' (hexidecimal) (row 17) and 'FF' gives the output '16'.

In Figure 5, the BRAMs are enumerated as 60. Each BRAM 60 in the ByteSub module 52 operates on two State bytes at a time. Each State byte $B_0$ to $B_{15}$ is provided as the input to a respective one of the 16 single port RAMs (not shown) provided by the 8 BRAMs 60. Thus, each BRAM 60 in the ByteSub module 52 operates on two State bytes at a time. The respective resulting outputs of the BRAMs 60 are then provided as the input to the ShiftRow module 54, again in State format as shown in Figure 6.

In the ShiftRow module 54, the required cyclical shifting on the rows of the State 10 is conveniently performed by appropriate hardwiring arrangements as shown in Figure 7. Row 1 and Row 3 of the State 10 are operated on differently during encryption and decryption. In the respective data lines 62, 64 for Row 1 and Row 3, the ShiftRow module 54 therefore includes selectable alternative hardwiring arrangements 66, 68 for Row 1 and 70, 72 for Row 3. The alternative hardwiring arrangements 66, 68 and 70, 72 are selectable via a respective switch, or 2-to-1 multiplexer 74, 76, depending on the setting of a control signal *Enc/Dec*. The control signal *Enc/Dec* is generated externally of the apparatus 40 and determines whether or not the apparatus 40 performs data encryption or data decryption. During encryption, hardwiring arrangement 66 is selected for data line 62 while hardwiring arrangement 70 is selected for data line 64. During decryption, hardwiring arrangement 68 is selected for data line 62 while hardwiring arrangement 72 is selected for data line 64. The resulting State 10 output from the Shiftrow module 54 is provided to the MixCol module 56, which is shown in Figure 5a.

The MixCol module 56 transforms each column (Co10 to Col3) of the State 10. Each column is considered a polynomial over $GF(2^8)$ and multiplied modulo $x^4+1$ with a fixed polynomial $c(x)$ as set out in equation [1] for encryption and equation [2] for decryption. This can be considered as a matrix multiplication as follows:

During encryption:

$$\begin{bmatrix} b_0 \\ b_1 \\ b_2 \\ b_3 \end{bmatrix} = \begin{bmatrix} 02 & 03 & 01 & 01 \\ 01 & 02 & 03 & 01 \\ 01 & 01 & 02 & 03 \\ 03 & 01 & 01 & 02 \end{bmatrix} \begin{bmatrix} a_0 \\ a_1 \\ a_2 \\ a_3 \end{bmatrix} \qquad [3]$$

During decryption:

$$\begin{bmatrix} b_0 \\ b_1 \\ b_2 \\ b_3 \end{bmatrix} = \begin{bmatrix} 0E & 0B & 0D & 09 \\ 09 & 0E & 0B & 0D \\ 0D & 09 & 0E & 0B \\ 0B & 0D & 09 & 0E \end{bmatrix} \begin{bmatrix} a_0 \\ a_1 \\ a_2 \\ a_3 \end{bmatrix} \qquad [4]$$

Where the input to the MixCol module 56 may be denoted in State format as follows:

|       | Col 0 | Col 1 | Col 2 | Col 3 |
|-------|-------|-------|-------|-------|
| **Row 0** | $a_0$ | $a_4$ | $a_8$ | $a_{12}$ |
| **Row 1** | $a_1$ | $a_5$ | $a_9$ | $a_{13}$ |
| **Row 2** | $a_2$ | $a_6$ | $a_{10}$ | $a_{14}$ |
| **Row 3** | $a_3$ | $a_7$ | $a_{11}$ | $a_{15}$ |

And the output of the output may be denoted in State format as:

|       | Col 0 | Col 1 | Col 2 | Col 3 |
|-------|-------|-------|-------|-------|
| **Row 0** | $b_0$ | $b_4$ | $b_8$ | $b_{12}$ |
| **Row 1** | $b_1$ | $b_5$ | $b_9$ | $b_{13}$ |
| **Row 2** | $b_2$ | $b_6$ | $b_{10}$ | $b_{14}$ |
| **Row 3** | $b_3$ | $b_7$ | $b_{11}$ | $b_{15}$ |

Equations [3] and [4] illustrate the matrix multiplication for the first column $[a_0\text{-}a_3]$ of the input State to produce the first column $[b_0\text{-}b_3]$ of the output State. The MixCol module 56 performs the same multiplication for the remaining columns of the input state to produce corresponding output State columns. The values given in the multiplication matrices in [3] and [4] correspond respectively with the coefficients of the fixed polynomial *c(x)* given in equations [1] and [2]. These values are specific to the Rijndael algorithm.

The matrix multiplication required for the MixCol transformation can be implemented using sixteen GF($2^8$) 8-bit multiplier blocks 78 (Figure 5a) arranged in four columns of four. The MixCol module 56 operates on one column of the input State at a time. Each multiplier block 78 in each column operates on the same input State byte. Thus for the first input State column $[a_0\text{-}a_3]$, each of the multipliers 78 in the first column operate on $a_0$, the multipliers 78 in the second column operate on $a_1$ and so on. In general, the first column of multipliers 78 operates on input State byte $a_{4(i)}$, the second column of multipliers operate on input State byte $a_{4(i+1)}$, the third column on input State byte $a_{4(i+2)}$ and the fourth column on input State byte $a_{4(i+3)}$, where i = 0 to 3 and corresponds to columns 1 to 4 of the input State. Each multiplier block 78 is also provided with a second input for receiving one of two possible multiplication coefficients whose respective values are determined by the multiplication matrices in [3] and [4]. For each multiplier block 78, the respective coefficients are selectable by means of a respective switch, or 2-to-1 multiplexer 86 that is operable by the control signal *Enc/Dec.* The output State is produced a column at a time [$b_{4(i)}$, $b_{4(i+1)}$, $b_{4(i+1)}$, $b_{4(i+1)}$, $b_{4(i+1)}$, for i = 0 to 3, where the first output State byte in each column is obtained by combining each of the first multiplier blocks 78 in each multiplier block column using a respective XOR gate 80.

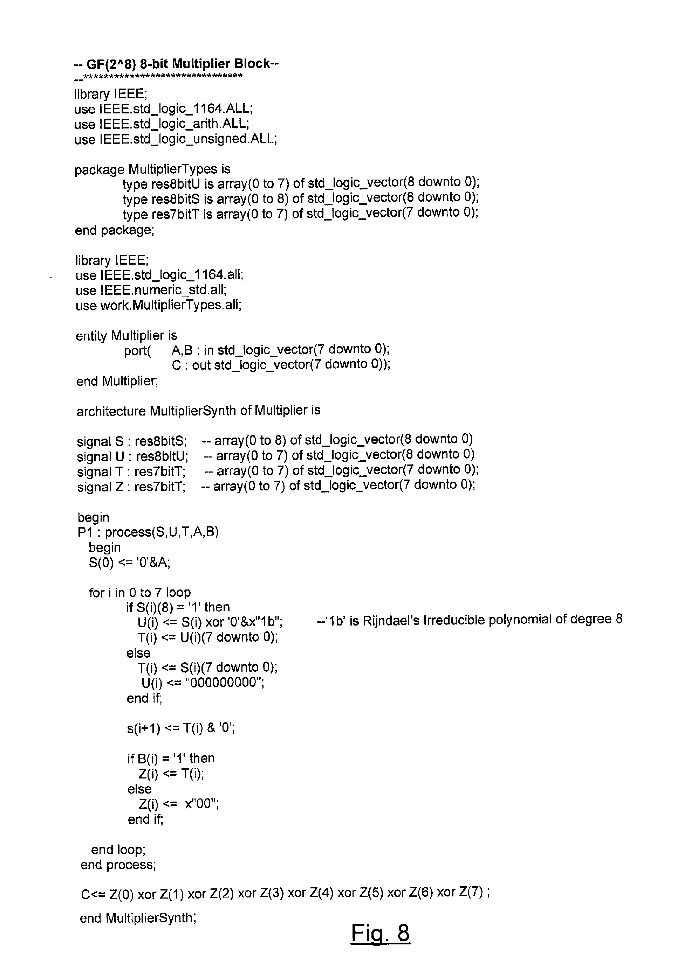

Figure 8 provides suitable VHDL (Very high speed integrated circuit Hardware Description Language) code for generating the multiplier blocks 78, in which the inputs A and B given in the code correspond respectively with the first and second inputs of the multiplier blocks, and C is the product of A and B. VHDL is a standard Hardware Description Language (HDL) developed by the Institute of Electrical and Electronics Engineers (IEEE). A commonly used version of VHDL was devised in 1987 and described in IEEE standard 1076-1987.

The MixCol module 56 produces an output in State 10 form that is provided as an input to the key addition module 58. The key addition module 58 is provided with the respective round key as a second input. The round key is equal in length to the data block length $N_b$ and thus comprises 16 bytes $K_i$, where i = 0 to 15. The key addition module 58 comprises an XOR component 90 arranged to perform a bitwise XOR operation of each byte $B_i$ of the input State 10 with a respective byte $K_i$ of the round key. The result is the Round Output, in State 10 form, which is provided to the next stage in the pipeline as appropriate.

The round module 46 for the final round is the same as the round module 44 except that the MixCol module 56 is omitted.

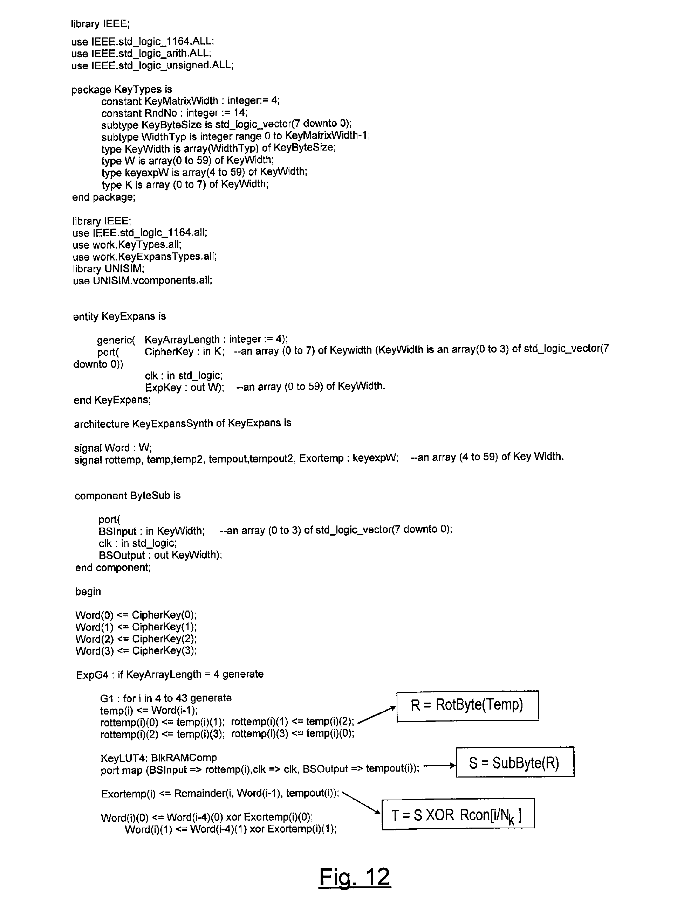

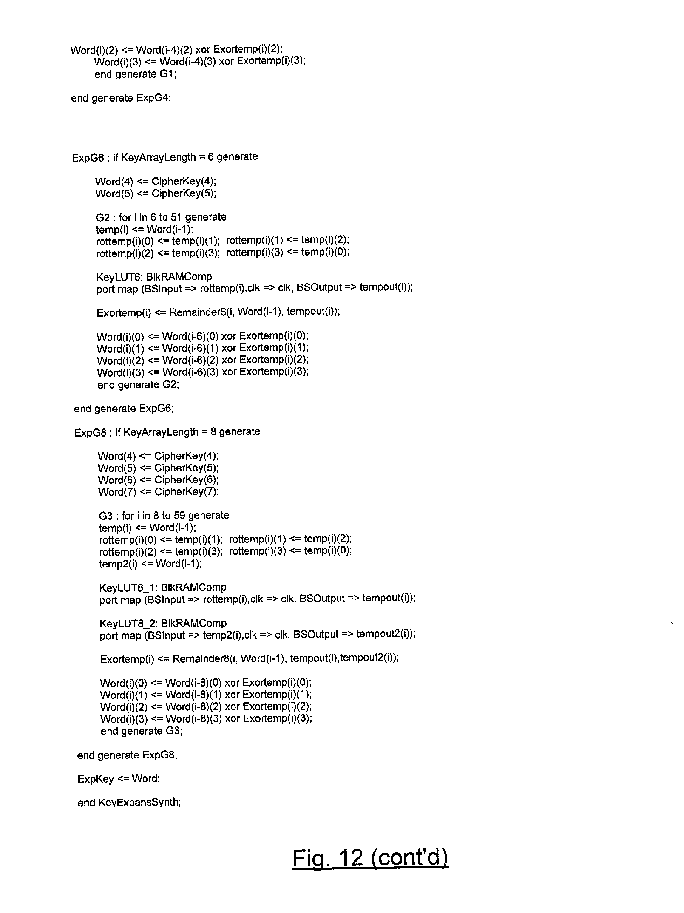

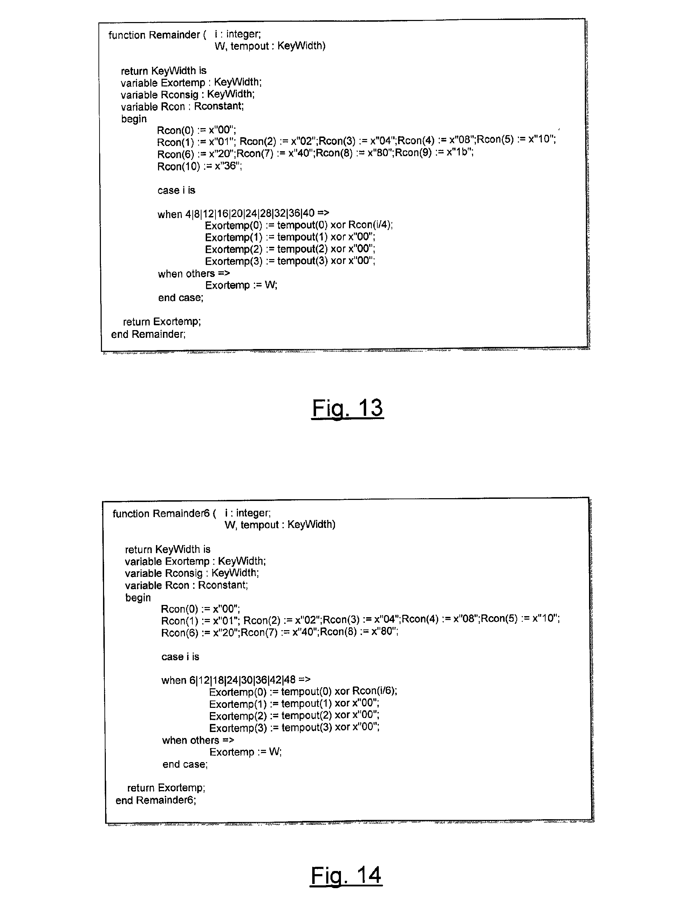

The apparatus 40 also includes a key schedule module 50 arranged to implement the key schedule 28. This is described in more detail hereinafter with reference to Figures 12 and 13.

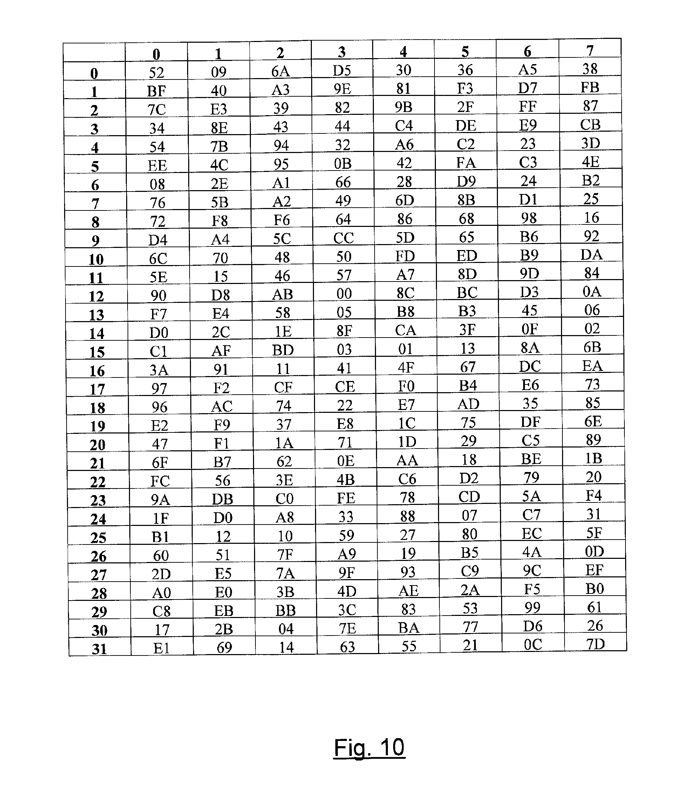

The apparatus 40 is arranged to perform, selectably, either encryption or decryption, although the invention is not limited to such and can be used with encryption-only or decryption-only apparatus. There are a number of ways to arrange for the apparatus 40 to perform both encryption and decryption. One method involves doubling the number of BRAMs, or other LUTs/ROMs, utilised (one set of BRAMs/LUTs being used for encryption and another set being used for decryption). However, this approach is costly on area. The preferred approach is illustrated in Figure 11. Figure 11 shows two representative ByteSub modules 52 (the ones for round 0 and for the final Round respectively) as described with reference to Figure 5. Each ByteSub module 52 comprises a plurality of LUTs, or ROMs, which in the present example are provided by eight BRAMs 60, each BRAM providing two 8-bit to 8-bit LUTs in the form of its respective two single port RAMs. Two further storage devices, in the form of ROMs 92, 94, are provided to store the respective LUT values required for encryption and decryption (as shown in Figures 7 and 10 respectively). Conveniently, ROMs 92, 94 can be implemented using one or more BRAMs (assuming implementation in a Virtex FPGA), configured to serve as ROMs, one containing the initialisation values for the LUTs required during encryption, the other containing the values for the LUTs required during decryption. The ROMs 92, 94 are selectable via a 2-to-1 selector switch, or 2-to-1 multiplexer 96, that is operable by the control signal *Enc/Dec.* Referring back to Figure 4, the ROMs 92, 94 and the multiplexer 96 are included in a RAM initialiser module 47, the output from the RAM initialiser module 47 (which output corresponds with the output of the multiplexer 96) being provided to each of the round modules 44, 46 in order to initialise the BRAMs in the respective ByteSub modules 52 (as shown in Figure 10) with the appropriate LUT values. Thus, when the apparatus 40 is required to perform data encryption (and the control signal *Enc/Dec* is set accordingly), all the BRAMs 60 in the ByteSub modules 52 are initialised with data read from the ROM 92 containing the values required for encryption. When the apparatus 40 required to perform data decryption (and the control signal *Enc/Dec* is set accordingly), all the BRAMs 60 in the ByteSub modules 52 are initialised with data read from the ROM 94 containing the values required for decryption.

The initialisation of the BRAMs 60 for either decryption or encryption takes 256 clock cycles as the 256 LUT values are read from ROM 92 or ROM 94 respectively. For a typical system clock of 25.3 MHz, this corresponds to an initialisation time delay of only 10us. When encrypting data, the keys are produced as each round requires them. Therefore, data encryption takes 10 clock cycles, corresponding to the 10 rounds when using a 128-bit key. Data decryption takes 20 clock cycles, 10 clock cycles for the required round keys to be constructed and a further 10 cycles corresponding to the 10 rounds.

It will be appreciated that the initialisation ROMs 92, 94 may be implemented using a single BRAM since a BRAM can be configured to serve as two 256 x 8-bit RAMs, each of which may be configured to operate as a ROM. In the preferred embodiment, however, each ROM 92, 94 is implemented using a respective BRAM, with each BRAM being arranged to store the respective encryption or decryption LUT values in both RAMs provided by that BRAM. Using the BRAM resources in this way simplifies the wiring required in the FPGA since two ROMs (i.e. the appropriately configured RAMs) with the appropriate LUT values are now provided to initialise the BRAMs in the round modules 44, 46 for encryption, and a further two ROMs with the appropriate LUT values for decryption are also available. When two BRAMs are used in this way, the multiplexer 96 is supplemented by a second 2-to-1 multiplexer (not shown), each of the two multiplexers having one input connected to a respective ROM holding encryption values, the other input being connected to a respective ROM holding decryption values. Both multiplexers are operable by the control signal *Enc/Dec* to produce a respective output. With this arrangement, two output lines are available from the RAM initialiser 47 (only one shown in Fig. 4) for initialising the BRAMs in the round modules 44, 46 and this simplifies the wiring in the FPGA. It will be appreciated that, equally, further BRAMs, or ROMs, may be used in a similar manner to further simplify the wiring if desired.

During decryption, the values of the LUTs utilised in the key schedule module 50 are the same as those required for encryption. Hence, the LUTs in the key schedule module 50 can conveniently be implemented as ROMs (where BRAMs are used, they can be configured to act as ROMs as described above). However, the round keys for decryption are used in reverse order to that used in encryption. Therefore, for the 128-bit key encryptor/decryptor apparatus 40, if data decryption is carried out initially, it is necessary to wait 20 clock cycles before the respective decrypted data appears (10 clock cycles for the construction of the 10 round keys and 10 clock cycles corresponding to the number of rounds in the apparatus 40). If encrypting data or previously encrypted data is being decrypted, this initial delay is only 10 clock cycles as the round keys do not necessarily need to be reconstructed. Overall, therefore, the apparatus 40 uses 102 BRAMs although the apparatus only requires 202 LUTs in total: 160 for the rounds, 40 for the key schedule and 2 for the initialisation ROMs.

Although the apparatus 40 is arranged to perform both encryption and decryption, a skilled person will appreciate that the apparatus 40 may be modified to perform encryption only or decryption only, if desired. For an encryption only or decryption only apparatus, the RAM initialiser 47 is not necessary, nor is the control signal *Enc/Dec* and associated switches. Each LUT in the round modules may be implemented as a ROM and initialised with the appropriate LUT values from Figure 7 or 10. Input data blocks can be accepted every clock cycle and after an initial delay (see above) the respective encrypted/decrypted data blocks appear on consecutive clock cycles.

There is now described a computer useable product, or computer program product, according to one aspect of the invention for generating a data encryption and/or decryption apparatus that operates using a cipher key, the length of which depends on one or more parameters supplied by a user to the computer useable product. For example, for generating a Rijndael encryption (or decryption) apparatus, the user supplies the computer useable product with a parameter indicating that the encryption/decryption apparatus is to operate on a 128-bit, 192-bit or 256-bit cipher key and the computer useable product generates a corresponding data encryption/decryption apparatus, or a model thereof, having the appropriate number of rounds and arranged to generate appropriate round keys. The computer useable product conveniently takes the form of one or more blocks, or modules, of code written in a Hardware Description Language (HDL) and in the following descriptions is illustrated by way of example as a set of VHDL blocks, although a skilled person will appreciate that other hardware description languages, such as Verilog, or equivalent circuit description tools may alternatively be used.

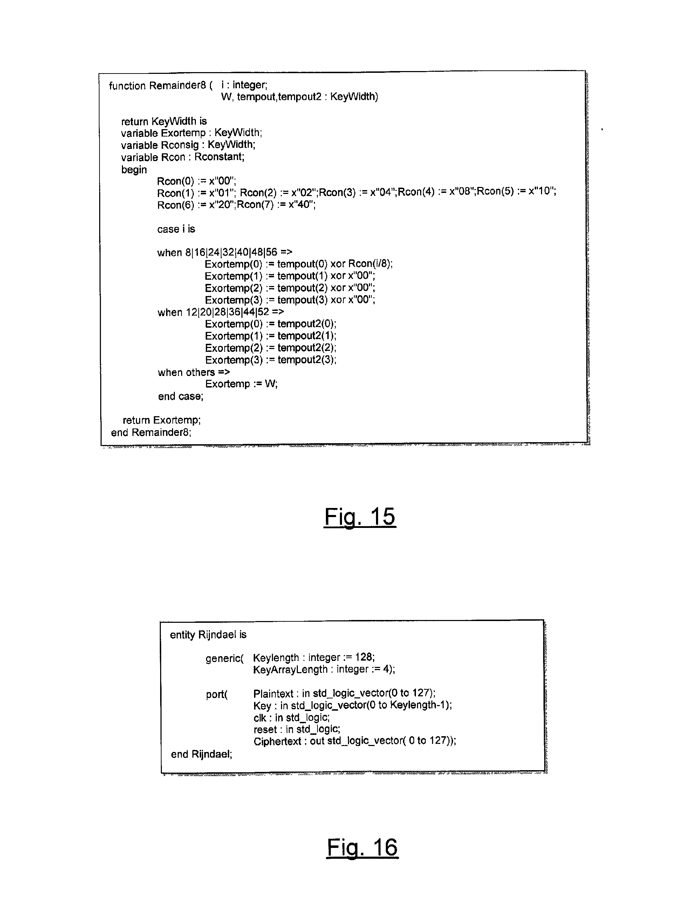

In the preferred embodiment, the computer useable product comprises a set of VHDL blocks, each block comprising VHDL code describing or defining a respective portion of the encryption and/or decryption apparatus, and/or its operation. For example, in the preferred embodiment, the computer useable product includes a block (not shown) comprising VHDL code for generating the pipeline of round modules (44, 46 in Figure 4) and pipeline registers 42. The number of round modules 44, 46 in the pipeline is determined by the length of the cipher key. Thus, the VHDL code includes "if/generate" statements to create the logic required for each key length. This means that if a key length of 128-bits is required, only the logic for that particular key length will be created. Similarly for the 192 and 256-bit key lengths. Hence, two extra rounds (12 round modules 44, 46 in all) will only created when a 192-bit key is required and four extra rounds (14 round modules 44, 46 in all) will only be created when a 256-bit key is selected. In order to determine how many round modules to generate, the "if/generate" statements examine a parameter whose value is set depending on the required cipher key length. In the preferred embodiment illustrated in Figures 12-17, the parameter is named *Keylength* and is declared as a generic parameter in the VHDL code of Figure 17. The same block of VHDL may also include code for the data/key addition module 48 and the RAM initialiser 47 where applicable. A skilled person will appreciate that coding in VHDL, or other HDL, the round modules 44, 46, registers 42, data/key addition module 48 and RAM initialiser 47 of apparatus 40is straightforward and is not described herein for reasons of clarity.

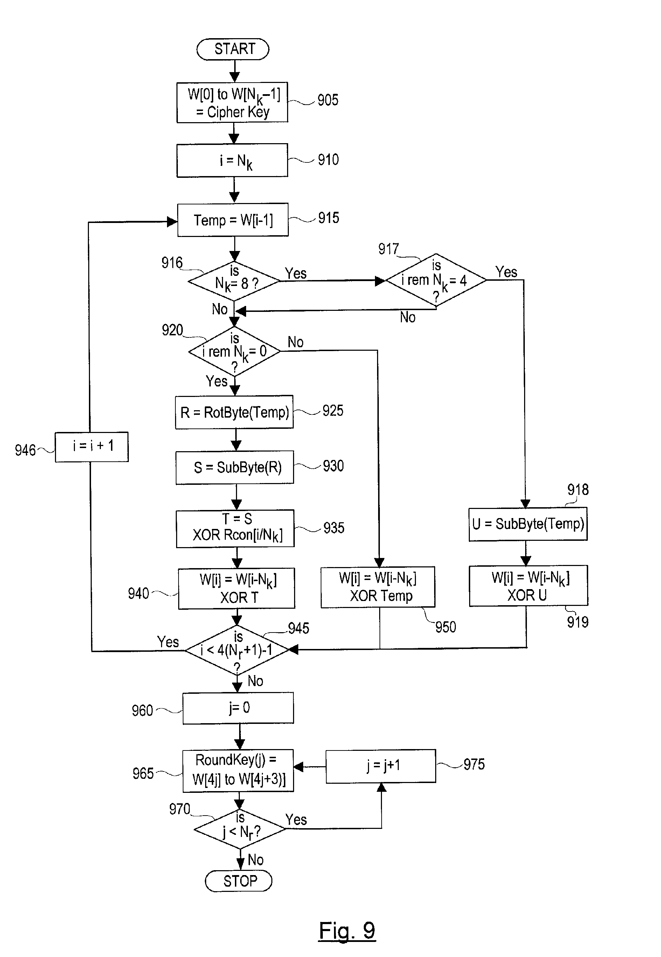

Figure 9 illustrates a flow chart for the preferred implementation of key schedule module 50 to support cipher keys of varying key lengths. The flow chart of Figure 9 is specifically intended for the implementation of key schedule module 50 in generating round keys for Rijndael encryption/decryption when the cipher key length is 128-bits, 192-bits or 256-bits.

In Figure 9, the key expansion part of the key schedule is shown as operations 905 to 945, and the round key selection part is shown as operations 960 to 975. The parameter $N_k$ represents key block length, the parameter $N_r$ represents number of rounds, and the parameter $N_b$ represents data block length. The inputs to the key schedule are the key block length, $N_k$ (which is determined by the user) and the cipher key. The outputs are the round keys.

Referring now to Figure 9 (numerals in parentheses() referring to the drawing labels), the cipher key is assigned to the first $N_k$ words W[0] to W[$N_k$-1] of the expanded key (905). A first counter *i* (which represents the position of a word within the expanded key) is set to $N_k$ (910). The word W[*i*-1] is assigned to a 4-byte word *Temp* (915). If $N_k$ is equal to 8 (which corresponds to a 256-bit key length) (916) then a remainder function *rem* is performed on the counter *i* to determine if its current value leaves a remainder of 4 when divided by $N_k$ (917).

The *rem* function returns the remainder value in a division operation. Thus, *i rem* $N_k$ returns the remainder of $i/ N_k$. If *i* rem $N_k$ is not equal to 4, it is determined whether or not the current value of counter *i* is an exact multiple of $N_k$ (920). If the result of the *rem* function is not zero i.e. if the counter value is not exactly divisible by $N_k$, then the word W[$i$-$N_k$] is XORed with the word currently assigned to *Temp* to produce the next word W[$i$] (950). For example, when *i* = 5 and $N_k$ = 4, W[5] is produced by XORing W[1] with W[4].

The value of counter *i* is then tested to check if all the words of the expanded key have been produced (945). For example, for $N_k$ = 4, $N_r$ = 10 and so the value of counter *i* is tested to see if it is less than 43 since 44 words are required. If *i* is less than 44 i.e. the expanded key is not complete, then counter *i* is incremented (946) and control returns to operation 915.

If the result of the *rem* function is zero (920), this indicates that the word currently assigned to *Temp* is in a position that is a multiple of $N_k$ and so requires to undergo a transformation. A function *RotByte* is performed on the word assigned to *Temp,* the result being assigned to a 4-byte word R (925). The RotByte function involves a cyclical shift to the left of the bytes in a 4-byte word. For example, an input of ($B_0$, $B_1$, $B_2$, $B_3$) will produce the output ($B_1$, $B_2$, $B_3$, $B_0$).

A function *SubByte* is then performed on R (930), the result being assigned to a 4-byte word S. *SubByte* operates on a 4-byte word and involves subjecting each byte to the ByteSub transformation 30 described above.

The resulting word S is XORed with the result of a function *Rcon[x],* where x = $i$/$N_k$, the result being assigned to a 4-byte word *T* (935). *Rcon[x]* returns a 4-byte vector, Rcon*[x]* = (*RC(x),* '00', '00', '00'), where the values of *RC[x]* are as follows:

| RC[1] = '01' | RC[2] = '02' | RC[3] = '04' | RC[4] = '08' | RC[5] = '10' |
|---|---|---|---|---|
| RC[6] = '20' | RC[7] = '40' | RC[8] = '80' | RC[9] = '1B' | RC[10] = '36' |

The word W[$i$-$N_k$] is then XORed with the word currently assigned to *T* to produce the next word W[$i$] (940).

The value of counter *i* is then tested to check if all the words of the expanded key have been produced (945). If *i* is not less than 4($N_r$+1)-1 then the expanded key is complete.

If, at operation 917, the value of *i rem* $N_k$ = 4, then the value currently assigned to *Temp* is subjected to the *SubByte* function, the result being assigned to a 4-byte word *U* (918). The word W[$i$-$N_k$] is then XORed with the word currently assigned to *U* to produce the next word W[$i$] (919). The value of counter *i* is then tested to check if all the words of the expanded key have been produced (945).

To perform round key selection, a second counter j (which represents a round key index) is set to zero (960). Four 4-byte words W[4j] to W[4j+3] are assigned to Round Key[j] (965) for j = 0 to $N_r$ (965, 970, 975). For example, for a ten round encryption/decryption ($N_r$ = 10), eleven round keys are provided, round key 0 to round key 10, where round key 0 comprises words W[0] to W[3] of the expanded key (i.e. the original cipher key), round key 1 comprises words W[4] to W[7] of the expanded key, and so on (See Fig. 1c). Round key 0 is used by the data/key addition module 48, round key 1 is provided to the round module 44 for round 1, round key 2 is provided to the round module 44 for round 2 and so on until round key 10 is used in the round module 46 for the final round (see Figs 4 and 5).

The round keys are created as required, hence, round key 0 is available immediately, round key 1 is created one clock cycle later and so on.

In the key schedule module 50, LUTs can also be used to implement logic functions. In particular, some words are subjected to the ByteSub transformation 30 during key expansion (see operations 918, 930 in Figure 9) and this is preferably implemented using one or more LUTs (not shown). The content of the LUTs during encryption is the same as given in Figure 7. For example, in an apparatus 40 utilizing a 128-bit key, forty words are created during expansion of the key and every fourth word is passed through the Rijndael s-box (i.e. subjected to the ByteSub transformation 30) with each byte in the word being transformed, making a total of forty bytes requiring transformation. In the preferred embodiment, therefore, forty 8-bit to 8-bit LUTs (not shown) are included in the key schedule module 50. When using Xilinx Virtex BRAMs to implement these, 20 BRAMs are required. Thus, to implement the round modules 44, 46 and the key schedule 50, a total of 100 BRAMs are required, 80 BRAMs are required for the 10 rounds and a further 20 for the key schedule module 50. Similarly, 112 BRAMs are required for a 192-bit version of the apparatus (96 for the 12 rounds and 16 for the key schedule) and 138 for a 256-bit version (112 for the 14 rounds and 26 for the key schedule).

In the decryption operation, the inverse of the ByteSub transformation 30 is also advantageously implemented as a LUT or ROM. However, the LUT values for decryption are different to those required for encryption. Figure 10 shows the Hexadecimal values contained in a LUT during decryption for implementing the inverse of the ByteSub transformation 30. The layout of the table shown in Figure 10 is the same as described for Figure 7. For example, an input of '00' (hexadecimal) would return the output, '52', while an input of 'FF' returns the output '7D'.

Suitable VHDL code for implementing the flowchart of Figure 9, and thus the key schedule module 50, is outlined in Figure 13. The code comprises a *ByteSub* component since the key schedule module 50 utilizes the Rijndael s-box as described above. The code also includes VHDL functions: *Remainder, Remainder6, and Remainder8*. These are contained in a package *KeyExpansTypes* and are outlined in Figures 14, 15 and 16 respectively. The remainder functions *Remainder, Remainder6, and Remainder8* perform the *rem* function described with respect to Figure 9 (917, 920) and conveniently also incorporate the XORing with the round constants as described with respect to operation 935 in Figure 9.

The length of key (128, 192 or 256) required and the corresponding key array length (4,6 or 8) are entered in the component for generating the overall top Rijndael core as generic properties as shown in Figure 17 *(Keylength* and *KeyArrayLength* respectively). In use, the user sets the parameters *Keylength* and *KeyArrayLength* as desired and the computer usable product of the invention generates an appropriate encryption/decryption apparatus (including appropriate round keys).

It will be understood that the computer useable product in itself does not generate a physical encryption/decryption apparatus but rather generates, in conjunction with an appropriate conventional circuit synthesis tool, a model of an encryption/decryption apparatus typically in the form of digital design data. For example, Synplify Pro V7.0 provided by Synplicity of Sunnyvale, California, USA is an example of a synthesis tool which can accept VHDL code blocks and produce a circuit description file, or design data, in the form of an EDIF (Electronic Design Interchange Format) netlist.

The output of the synthesis tool, e.g. the EDIF netlist, is then provided to a suitable implementation tool whereby the design data is used to generate data for creating, or configuring, a physical circuit. For example, the Foundation Series 3.li implementation tool provided by Xilinx Inc. of San Jose, California, USA, can accept an EDIF netlist and generate a corresponding data bitstream which may be used to configure an FPGA (Field Programmable Gate Array) device such as a Xilinx Virtex-E FPGA device.

In the foregoing description, the preferred implementation is on FPGA. It will be understood that an apparatus generated in accordance with invention may alternatively be implemented on other conventional devices such as other Programmable Logic Devices (PLDs) or an ASIC (Application Specific Integrated Circuit). In an ASIC implementation, the LUTs may be implemented in conventional manner using, for example, standard RAM or ROM components.

In the preferred embodiment described herein, the computer useable product comprises a plurality of interoperable VHDL blocks. It will be understood that the specific delimitation of VHDL blocks illustrated herein is not limiting and that, in alternative embodiments, more or fewer VHDL blocks may be used. For example, the computer useable product may alternatively be implemented by a single block of VHDL code.

The invention is not limited to the embodiments described herein which may be modified or varied without departing from the scope of the invention.

**Claims**

1. A computer useable product co-operable with a circuit synthesis tool for generating a data encryption apparatus for encrypting a block of plaintext data using a cipher key to produce a block of encrypted data, the computer usable product comprising a first parameter, programmable by a user, the value of which determines the length of the cipher key, the computer useable product being arranged to cause the apparatus to implement a number of encryption rounds, the number of rounds depending on the value of the first parameter, the computer useable product further including means for implementing a key schedule module for generating, from the cipher key, a number of round keys for use in respective encryption rounds, the number of generated round keys depending on the value of the first parameter.

2. A computer useable product as claimed in Claim 1, arranged to generate a plurality of instances of a data processing module arranged in a data processing pipeline, the data processing modules being arranged to implement respective encryption rounds, wherein the number of data processing modules is determined by the value of said first parameter.

3. A computer useable product as claimed in Claim 1 or 2, wherein the encryption apparatus is arranged to perform data encryption in accordance with the Rijndael Block Cipher.

4. A computer useable product as claimed in Claim 3, wherein the key schedule implementing means comprises a key expansion part, in which an expanded key is generated from the cipher key, the length of the expanded key being determined by the value of said first parameter; and a round key selection part, in which said round keys are created by selecting a respective part of the expanded key.

5. A computer useable product as claimed in Claim 4, in which the cipher key and the expanded key each comprise a plurality of data words, at least some of the words of the expanded key being derived by application of one or more transform operations to one or more words of the cipher key, wherein said one or more transform operations are determined by the value of said first parameter.

6. A computer useable product as claimed in Claim 5, in which the key schedule implementing means includes a first counter the value of which represents the position of a data word within the expanded key, said one or more transform operations being determined by the value of said first counter relative to the value of said first parameter.

7. A computer useable product as claimed in Claim 6, wherein the value of the first parameter indicates the number of blocks of data words of which the cipher key is comprised, said one or more transform operations being determined by the value of the remainder of dividing the value of said first counter by the value of said first parameter.

8. A computer useable product as claimed in Claim 7, wherein the value of said first counter is initialised to the value of said first parameter and incremented by one after the creation of each successive word of the expanded key until the expanded key is complete.

9. A computer useable product as claimed in any preceding claim, in which said computer useable product comprises one or more blocks of HDL (Hardware Description Language) code.

10. A computer useable product co-operable with a circuit synthesis tool for generating a data decryption apparatus for decrypting a block of encrypted data using a cipher key to produce a block of plaintext data, the computer usable product comprising a first parameter, programmable by a user, the value of which determines the length of the cipher key, the computer useable product being arranged to cause the apparatus to implement a number of decryption rounds, the number of rounds depending on the value of the first parameter, the computer useable product further including means for implementing a key schedule module for generating, from the cipher key, a number of round keys for use in respective decryption rounds, the number of generated round keys depending on the value of the first parameter.

11. A method for generating a data encryption apparatus for encrypting a block of plaintext data using a cipher key to produce a block of encrypted data, the method comprising: providing a first parameter, programmable by a user, the value of which determines the length of the cipher key; causing the apparatus to implement a number of encryption rounds, the number of rounds depending on the value of the first parameter; implementing a key schedule for generating, from the cipher key, a number of round keys for use in respective encryption rounds, the number of generated round keys depending on the value of the first parameter.

Fig. 1a

Fig. 1b

Fig. 1c

Fig. 6

20

Plaintext
Block

Cipher Key

22
Data/Key
Addition

24
Rnd
0

24
Rnd
1

....

....

24
Rnd
8

26
Final
Rnd

Cipher
Text

28
Key
Schedule

**Fig. 2**

24

Round
Input

Round
Key

30
ByteSub

32
ShiftRow

34
MixCol

36
Key
Addition

Round
Output

**Fig. 3**

92
Encrypt
ROM

94
Decrypt
ROM

96

Enc/Dec

52
Round 0

60 60 60 60

60 60 60 60

...

52
Final Round

60 60 60 60

60 60 60 60

**Fig. 11**

Fig. 4

44

52

ByteSub

Round Input

| $B_0$ | 60 | $B_2$ | 60 | $B_4$ | 60 | $B_6$ | 60 |
| $B_1$ | | $B_3$ | | $B_5$ | | $B_7$ | |

| $B_8$ | 60 | $B_{10}$ | 60 | $B_{12}$ | 60 | $B_{14}$ | 60 |
| $B_9$ | | $B_{11}$ | | $B_{13}$ | | $B_{15}$ | |

ShiftRow

54

Row 0

Row 1

62

66

68

74

Row 2

Row 3

64

70

72

76

Enc/Dec

MixCol

56

(See Fig. 5a)

Enc/Dec

Key Addition

58

$B_i$

90

Round Output

Round Key

$K_i$

Fig. 5

Fig. 5a

|    | 0  | 1  | 2  | 3  | 4  | 5  | 6  | 7  |
|----|----|----|----|----|----|----|----|----|
| 0  | 63 | 7C | 77 | 7B | F2 | 6B | 6F | C5 |
| 1  | 30 | 01 | 67 | 2B | FE | D7 | AB | 76 |
| 2  | CA | 82 | C9 | 7D | FA | 59 | 47 | F0 |
| 3  | AD | D4 | A2 | AF | 9C | A4 | 72 | C0 |
| 4  | B7 | FD | 93 | 26 | 36 | 3F | F7 | CC |
| 5  | 34 | A5 | E5 | F1 | 71 | D8 | 31 | 15 |
| 6  | 04 | C7 | 23 | C3 | 18 | 96 | 05 | 9A |
| 7  | 07 | 12 | 80 | E2 | EB | 27 | B2 | 75 |
| 8  | 09 | 83 | 2C | 1A | 1B | 6E | 5A | A0 |
| 9  | 52 | 3B | D6 | B3 | 29 | E3 | 2F | 84 |
| 10 | 53 | D1 | 00 | ED | 20 | FC | B1 | 5B |
| 11 | 6A | CB | BE | 39 | 4A | 4C | 58 | CF |
| 12 | D0 | EF | AA | FB | 43 | 4D | 33 | 85 |
| 13 | 45 | F9 | 02 | 7F | 50 | 3C | 9F | A8 |
| 14 | 51 | A3 | 40 | 8F | 92 | 9D | 38 | F5 |
| 15 | BC | B6 | DA | 21 | 10 | FF | F3 | D2 |
| 16 | CD | 0C | 13 | EC | 5F | 97 | 44 | 17 |
| 17 | C4 | A7 | 7E | 3D | 64 | 5D | 19 | 73 |
| 18 | 60 | 81 | 4F | DC | 22 | 2A | 90 | 88 |
| 19 | 46 | EE | B8 | 14 | DE | 5E | 0B | DB |
| 20 | E0 | 32 | 3A | 0A | 49 | 06 | 24 | 5C |
| 21 | C2 | D3 | AC | 62 | 91 | 95 | E4 | 79 |
| 22 | E7 | C8 | 37 | 6D | 8D | D5 | 4E | A9 |
| 23 | 6C | 56 | F4 | EA | 65 | 7A | AE | 08 |
| 24 | BA | 78 | 25 | 2E | 1C | A6 | B4 | C6 |
| 25 | E8 | DD | 74 | 1F | 4B | BD | 8B | 8A |
| 26 | 70 | 3E | B5 | 66 | 48 | 03 | F6 | 0E |
| 27 | 61 | 35 | 57 | B9 | 86 | C1 | 1D | 9E |
| 28 | E1 | F8 | 98 | 11 | 69 | D9 | 8E | 94 |
| 29 | 9B | 1E | 87 | E9 | CE | 55 | 28 | DF |
| 30 | 8C | A1 | 89 | 0D | BF | E6 | 42 | 68 |
| 31 | 41 | 99 | 2D | 0F | B0 | 54 | BB | 16 |

Fig. 7

```vhdl
-- GF(2^8) 8-bit Multiplier Block--
--*******************************
library IEEE;
use IEEE.std_logic_1164.ALL;
use IEEE.std_logic_arith.ALL;
use IEEE.std_logic_unsigned.ALL;

package MultiplierTypes is
        type res8bitU is array(0 to 7) of std_logic_vector(8 downto 0);
        type res8bitS is array(0 to 8) of std_logic_vector(8 downto 0);
        type res7bitT is array(0 to 7) of std_logic_vector(7 downto 0);
end package;

library IEEE;
use IEEE.std_logic_1164.all;
use IEEE.numeric_std.all;
use work.MultiplierTypes.all;

entity Multiplier is
        port(   A,B : in std_logic_vector(7 downto 0);
                C : out std_logic_vector(7 downto 0));
end Multiplier;

architecture MultiplierSynth of Multiplier is

signal S : res8bitS;    -- array(0 to 8) of std_logic_vector(8 downto 0)
signal U : res8bitU;    -- array(0 to 7) of std_logic_vector(8 downto 0)
signal T : res7bitT;    -- array(0 to 7) of std_logic_vector(7 downto 0);
signal Z : res7bitT;    -- array(0 to 7) of std_logic_vector(7 downto 0);

begin
P1 : process(S,U,T,A,B)
  begin
  S(0) <= '0'&A;

    for i in 0 to 7 loop
        if S(i)(8) = '1' then
          U(i) <= S(i) xor '0'&x"1b";        --'1b' is Rijndael's Irreducible polynomial of degree 8
          T(i) <= U(i)(7 downto 0);
        else
          T(i) <= S(i)(7 downto 0);
          U(i) <= "000000000";
        end if;

        s(i+1) <= T(i) & '0';

        if B(i) = '1' then
          Z(i) <= T(i);
        else
          Z(i) <=  x"00";
        end if;

  end loop;
end process;

C<= Z(0) xor Z(1) xor Z(2) xor Z(3) xor Z(4) xor Z(5) xor Z(6) xor Z(7) ;

end MultiplierSynth;
```

## Fig. 8

START

W[0] to W[$N_k$-1] = Cipher Key — 905

i = $N_k$ — 910

Temp = W[i-1] — 915

916 — is $N_k$= 8 ? — Yes — 917 — is i rem $N_k$ = 4 ? — Yes

No — No

920 — is i rem $N_k$= 0 ? — No

Yes

R = RotByte(Temp) — 925

946 — i = i + 1

S = SubByte(R) — 930

918

T = S XOR Rcon[i/$N_k$] — 935

U = SubByte(Temp)

940 — W[i] = W[i-$N_k$] XOR T

W[i] = W[i-$N_k$] XOR Temp

W[i] = W[i-$N_k$] XOR U

950

919

Yes — 945 — is i < 4($N_r$+1)-1 ?

No

960 — j= 0

965 — RoundKey(j) = W[4j] to W[4j+3)] ◄— j = j+1 — 975

970 — is j < $N_r$? — Yes

No

STOP

<u>Fig. 9</u>

|    | 0  | 1  | 2  | 3  | 4  | 5  | 6  | 7  |
|----|----|----|----|----|----|----|----|----|
| 0  | 52 | 09 | 6A | D5 | 30 | 36 | A5 | 38 |
| 1  | BF | 40 | A3 | 9E | 81 | F3 | D7 | FB |
| 2  | 7C | E3 | 39 | 82 | 9B | 2F | FF | 87 |
| 3  | 34 | 8E | 43 | 44 | C4 | DE | E9 | CB |
| 4  | 54 | 7B | 94 | 32 | A6 | C2 | 23 | 3D |
| 5  | EE | 4C | 95 | 0B | 42 | FA | C3 | 4E |
| 6  | 08 | 2E | A1 | 66 | 28 | D9 | 24 | B2 |
| 7  | 76 | 5B | A2 | 49 | 6D | 8B | D1 | 25 |
| 8  | 72 | F8 | F6 | 64 | 86 | 68 | 98 | 16 |
| 9  | D4 | A4 | 5C | CC | 5D | 65 | B6 | 92 |
| 10 | 6C | 70 | 48 | 50 | FD | ED | B9 | DA |
| 11 | 5E | 15 | 46 | 57 | A7 | 8D | 9D | 84 |
| 12 | 90 | D8 | AB | 00 | 8C | BC | D3 | 0A |
| 13 | F7 | E4 | 58 | 05 | B8 | B3 | 45 | 06 |
| 14 | D0 | 2C | 1E | 8F | CA | 3F | 0F | 02 |
| 15 | C1 | AF | BD | 03 | 01 | 13 | 8A | 6B |
| 16 | 3A | 91 | 11 | 41 | 4F | 67 | DC | EA |
| 17 | 97 | F2 | CF | CE | F0 | B4 | E6 | 73 |
| 18 | 96 | AC | 74 | 22 | E7 | AD | 35 | 85 |
| 19 | E2 | F9 | 37 | E8 | 1C | 75 | DF | 6E |
| 20 | 47 | F1 | 1A | 71 | 1D | 29 | C5 | 89 |
| 21 | 6F | B7 | 62 | 0E | AA | 18 | BE | 1B |
| 22 | FC | 56 | 3E | 4B | C6 | D2 | 79 | 20 |
| 23 | 9A | DB | C0 | FE | 78 | CD | 5A | F4 |
| 24 | 1F | D0 | A8 | 33 | 88 | 07 | C7 | 31 |
| 25 | B1 | 12 | 10 | 59 | 27 | 80 | EC | 5F |
| 26 | 60 | 51 | 7F | A9 | 19 | B5 | 4A | 0D |
| 27 | 2D | E5 | 7A | 9F | 93 | C9 | 9C | EF |
| 28 | A0 | E0 | 3B | 4D | AE | 2A | F5 | B0 |
| 29 | C8 | EB | BB | 3C | 83 | 53 | 99 | 61 |
| 30 | 17 | 2B | 04 | 7E | BA | 77 | D6 | 26 |
| 31 | E1 | 69 | 14 | 63 | 55 | 21 | 0C | 7D |

## Fig. 10

```
library IEEE;

use IEEE.std_logic_1164.ALL;
use IEEE.std_logic_arith.ALL;
use IEEE.std_logic_unsigned.ALL;

package KeyTypes is
     constant KeyMatrixWidth : integer:= 4;
     constant RndNo : integer := 14;
     subtype KeyByteSize is std_logic_vector(7 downto 0);
     subtype WidthTyp is integer range 0 to KeyMatrixWidth-1;
     type KeyWidth is array(WidthTyp) of KeyByteSize;
     type W is array(0 to 59) of KeyWidth;
     type keyexpW is array(4 to 59) of KeyWidth;
     type K is array (0 to 7) of KeyWidth;
end package;

library IEEE;
use IEEE.std_logic_1164.all;
use work.KeyTypes.all;
use work.KeyExpansTypes.all;
library UNISIM;
use UNISIM.vcomponents.all;


entity KeyExpans is

     generic(  KeyArrayLength : integer := 4);
     port(       CipherKey : in K;  --an array (0 to 7) of Keywidth (KeyWidth is an array(0 to 3) of std_logic_vector(7
downto 0))
               clk : in std_logic;
               ExpKey : out W);   --an array (0 to 59) of KeyWidth.
end KeyExpans;

architecture KeyExpansSynth of KeyExpans is

signal Word : W;
signal rottemp, temp,temp2, tempout,tempout2, Exortemp : keyexpW;    --an array (4 to 59) of Key Width.


component ByteSub is

     port(
     BSInput : in KeyWidth;     --an array (0 to 3) of std_logic_vector(7 downto 0);
     clk : in std_logic;
     BSOutput : out KeyWidth);
end component;

begin

Word(0) <= CipherKey(0);
Word(1) <= CipherKey(1);
Word(2) <= CipherKey(2);
Word(3) <= CipherKey(3);

ExpG4 : if KeyArrayLength = 4 generate

     G1 : for i in 4 to 43 generate
     temp(i) <= Word(i-1);
     rottemp(i)(0) <= temp(i)(1);  rottemp(i)(1) <= temp(i)(2);
     rottemp(i)(2) <= temp(i)(3);  rottemp(i)(3) <= temp(i)(0);

     KeyLUT4: BlkRAMComp
     port map (BSInput => rottemp(i),clk => clk, BSOutput => tempout(i));

     Exortemp(i) <= Remainder(i, Word(i-1), tempout(i));

     Word(i)(0) <= Word(i-4)(0) xor Exortemp(i)(0);
          Word(i)(1) <= Word(i-4)(1) xor Exortemp(i)(1);
```

$$R = \text{RotByte}(\text{Temp})$$

$$S = \text{SubByte}(R)$$

$$T = S \text{ XOR } \text{Rcon}[i/N_k]$$

## Fig. 12

```
Word(i)(2) <= Word(i-4)(2) xor Exortemp(i)(2);
     Word(i)(3) <= Word(i-4)(3) xor Exortemp(i)(3);
         end generate G1;

end generate ExpG4;




ExpG6 : if KeyArrayLength = 6 generate

     Word(4) <= CipherKey(4);
     Word(5) <= CipherKey(5);

     G2 : for i in 6 to 51 generate
     temp(i) <= Word(i-1);
     rottemp(i)(0) <= temp(i)(1);  rottemp(i)(1) <= temp(i)(2);
     rottemp(i)(2) <= temp(i)(3);  rottemp(i)(3) <= temp(i)(0);

     KeyLUT6: BlkRAMComp
     port map (BSInput => rottemp(i),clk => clk, BSOutput => tempout(i));

     Exortemp(i) <= Remainder6(i, Word(i-1), tempout(i));

     Word(i)(0) <= Word(i-6)(0) xor Exortemp(i)(0);
     Word(i)(1) <= Word(i-6)(1) xor Exortemp(i)(1);
     Word(i)(2) <= Word(i-6)(2) xor Exortemp(i)(2);
     Word(i)(3) <= Word(i-6)(3) xor Exortemp(i)(3);
         end generate G2;

end generate ExpG6;

ExpG8 : if KeyArrayLength = 8 generate

     Word(4) <= CipherKey(4);
     Word(5) <= CipherKey(5);
     Word(6) <= CipherKey(6);
     Word(7) <= CipherKey(7);

     G3 : for i in 8 to 59 generate
     temp(i) <= Word(i-1);
     rottemp(i)(0) <= temp(i)(1);  rottemp(i)(1) <= temp(i)(2);
     rottemp(i)(2) <= temp(i)(3);  rottemp(i)(3) <= temp(i)(0);
     temp2(i) <= Word(i-1);

     KeyLUT8_1: BlkRAMComp
     port map (BSInput => rottemp(i),clk => clk, BSOutput => tempout(i));

     KeyLUT8_2: BlkRAMComp
     port map (BSInput => temp2(i),clk => clk, BSOutput => tempout2(i));

     Exortemp(i) <= Remainder8(i, Word(i-1), tempout(i),tempout2(i));

     Word(i)(0) <= Word(i-8)(0) xor Exortemp(i)(0);
     Word(i)(1) <= Word(i-8)(1) xor Exortemp(i)(1);
     Word(i)(2) <= Word(i-8)(2) xor Exortemp(i)(2);
     Word(i)(3) <= Word(i-8)(3) xor Exortemp(i)(3);
         end generate G3;

end generate ExpG8;

ExpKey <= Word;

end KeyExpansSynth;
```

# Fig. 12 (cont'd)

```
function Remainder (   i : integer;
                       W, tempout : KeyWidth)

   return KeyWidth is
   variable Exortemp : KeyWidth;
   variable Rconsig : KeyWidth;
   variable Rcon : Rconstant;
   begin
         Rcon(0) := x"00";
         Rcon(1) := x"01"; Rcon(2) := x"02";Rcon(3) := x"04";Rcon(4) := x"08";Rcon(5) := x"10";
         Rcon(6) := x"20";Rcon(7) := x"40";Rcon(8) := x"80";Rcon(9) := x"1b";
         Rcon(10) := x"36";

         case i is

         when 4|8|12|16|20|24|28|32|36|40 =>
                   Exortemp(0) := tempout(0) xor Rcon(i/4);
                   Exortemp(1) := tempout(1) xor x"00";
                   Exortemp(2) := tempout(2) xor x"00";
                   Exortemp(3) := tempout(3) xor x"00";
         when others =>
                   Exortemp := W;
         end case;

   return Exortemp;
end Remainder;
```

## Fig. 13

```
function Remainder6 (   i : integer;
                        W, tempout : KeyWidth)

   return KeyWidth is
   variable Exortemp : KeyWidth;
   variable Rconsig : KeyWidth;
   variable Rcon : Rconstant;
   begin
         Rcon(0) := x"00";
         Rcon(1) := x"01"; Rcon(2) := x"02";Rcon(3) := x"04";Rcon(4) := x"08";Rcon(5) := x"10";
         Rcon(6) := x"20";Rcon(7) := x"40";Rcon(8) := x"80";

         case i is

         when 6|12|18|24|30|36|42|48 =>
                   Exortemp(0) := tempout(0) xor Rcon(i/6);
                   Exortemp(1) := tempout(1) xor x"00";
                   Exortemp(2) := tempout(2) xor x"00";
                   Exortemp(3) := tempout(3) xor x"00";
         when others =>
                   Exortemp := W;
         end case;

   return Exortemp;
end Remainder6;
```

## Fig. 14

```
function Remainder8 (   i : integer;
                        W, tempout,tempout2 : KeyWidth)

    return KeyWidth is
    variable Exortemp : KeyWidth;
    variable Rconsig : KeyWidth;
    variable Rcon : Rconstant;
    begin
            Rcon(0) := x"00";
            Rcon(1) := x"01"; Rcon(2) := x"02";Rcon(3) := x"04";Rcon(4) := x"08";Rcon(5) := x"10";
            Rcon(6) := x"20";Rcon(7) := x"40";

            case i is

            when 8|16|24|32|40|48|56 =>
                        Exortemp(0) := tempout(0) xor Rcon(i/8);
                        Exortemp(1) := tempout(1) xor x"00";
                        Exortemp(2) := tempout(2) xor x"00";
                        Exortemp(3) := tempout(3) xor x"00";
            when 12|20|28|36|44|52 =>
                        Exortemp(0) := tempout2(0);
                        Exortemp(1) := tempout2(1);
                        Exortemp(2) := tempout2(2);
                        Exortemp(3) := tempout2(3);
            when others =>
                        Exortemp := W;
            end case;

    return Exortemp;
end Remainder8;
```

## Fig. 15

```
entity Rijndael is

        generic(    Keylength : integer := 128;
                    KeyArrayLength : integer := 4);

        port(       Plaintext : in std_logic_vector(0 to 127);
                    Key : in std_logic_vector(0 to Keylength-1);
                    clk : in std_logic;
                    reset : in std_logic;
                    Ciphertext : out std_logic_vector( 0 to 127));
end Rijndael;
```

## Fig. 16